# EUROPÄISCHE PATENTSCHRIFT

(11) **EP 0 848 794 B1**
(45) Veröffentlichungstag und Bekanntmachung des Hinweises auf die Patenterteilung: **03.03.1999**
(21) Anmeldenummer: 96934402.7
(22) Anmeldetag: 02.09.1996
(51) Int. Cl.: F16L 11/08

(54) **SICHERHEITSSCHLAUCH**
SAFETY HOSE
TUYAU FLEXIBLE DE SECURITE

(30) Priorität: 05.09.1995 DE 19532647
(43) Veröffentlichungstag der Anmeldung: 24.06.1998
(73) Patentinhaber: PHOENIX AKTIENGESELLSCHAFT, 21079 Hamburg (DE)
(72) Erfinder: FRIEDERICH, Hans-Werner, D-21423 Winsen (DE); HELLMIG, Winfried, D-21614 Buxtehude (DE); MAASS, Uwe, D-22149 Hamburg (DE); ZERFOWSKI, Peter, D-21147 Hamburg (DE)
(86) Internationale Anmeldenummer: DE9601621
(87) Internationale Veröffentlichungsnummer: WO9709558

(56) Entgegenhaltungen:
- EP-A- 0 567 115
- WO-A-86/07432
- DE-A- 2 552 819
- DE-A- 4 438 840
- GB-A- 1 171 933
- US-A- 3 604 461

## Beschreibung

Die Erfindung betrifft einen Sicherheitsschlauch aus elastomerem Werkstoff und/oder Kunststoff, insbesondere für die Förderung umweltgefährdender Stoffe (z.B. Chemikalien), bestehend aus einer Innenschicht (Seele), einer Außenschicht (Decke) sowie einem eingebetteten Festigkeitsträger, umfassend wiederum zwei Festigkeitsträgersysteme, die jeweils ein- oder mehrlagig ausgebildet sind, wobei sich zwischen den beiden Festigkeitsträgersystemen wenigstens eine trennende Zwischenschicht befindet und wobei das der Innenschicht zugewandte Festigkeitsträgersystem - im folgenden Festigkeitsträgersystem (I) genannt - eine geringe Dehnung, insbesondere eine Bruchdehnung < 10 %, sowie eine hohe chemische Beständigkeit gegenüber dem zu fördernden Stoff aufweist, während das der Außenschicht zugewandte Festigkeitsträgersystem - im folgenden Festigkeitsträgersystem (II) genannt - eine hohe Dehnung, insbesondere eine Bruchdehnung > 10 %, besitzt.

Ein gattungsgemäßer Sicherheitsschlauch ist beispielsweise aus der EP-A-0 567 115, DE-C-44 16 953 und DE-A-44 38 840 bekannt. Dabei ist die Außenschicht des Sicherheitsschlauches gemäß DE-C-44 16 953 bei einem Festigkeitsträgersystem (II), das gegenüber dem Festigkeitsträgersystem (I) eine größere chemische Resistenz aufweist, perforiert, so daß im Falle eines Versagens des Schlauches der Stoff nach außen dringen kann. Dieses bedeutet für die Anwender im Falle eines Schlauchversagens, das nicht sofort entdeckt wird, unter Umständen die größte Gefahr. Sollten bei so einem Schlauchsystem ätzende, giftige oder explosive Stoffe austreten, kann dies zu Beschädigungen an Anlagen oder Verletzungen von Personen führen.

Nach dem heutigen Stand der Technik ist es zudem sehr schwierig, für die große Palette der Stoffe ein Sicherheitssystem zu entwickeln, das für alle Substanzklassen geeignet ist. So wurde bereits ein Schlauch entwickelt, der einen Schaden anzeigen kann, bevor es zum Stoffaustritt kommt. So wurde das Festigkeitsträgersystem (I) mit einem leitenden Werkstoff ausgestattet. Sollte dieses Festigkeitsträgersystem zerstört werden, wird auch der elektrische Leiter defekt, so daß die Unterbrechung des Leiters angezeigt werden kann (EP-A-0 567 115, DE-A-44 38 840). Es ist allerdings nicht bei allen Stoffen ratsam, mit solchen Systemen zu arbeiten.

Im Hintergrund des hier dargelegten Standes der Technik besteht nun die Aufgabe der Erfindung darin, einen Sicherheitsschlauch bereitzustellen, der im Falle eines Versagens des Grundkörpers bis zum Austausch des Schlauches stoffdicht ist.

Diese Aufgabe wird erfindungsgemäß durch einen Sicherheitsschlauch mit den kennzeichnenden Merkmalen des Anspruches 1 oder 2 gelöst.

Nach der einen Variante ist zwischen dem Festigkeitsträgersystem (II) und der Außenschicht ein Haftsystem - im folgenden Haftsystem (III) genannt - vorhanden, das mit einem radial, wendelförmig oder axial verlaufenden Zweizonensystem (A, B) versehen ist, wobei sich die eine Zone - im folgenden Zone (A) genannt - gegenüber der anderen Zone - im folgenden Zone (B) genannt - durch eine geringere Haftwirkung auszeichnet, wobei hinsichtlich des Haftsystems (III) insbesondere folgende Alternativen zur Anwendung gelangen.
- Das Haftsystem (III) ist einstückig (d.h. stoffschlüssig) mit der Außenschicht verbunden, wobei die unterschiedliche Haftwirkung innerhalb des Zweizonensystems (A, B) insbesondere direkt (d.h. ohne zusätzliche Schicht) am Festigkeitsträgersystem (II) zur Entfaltung gelangt.
- Aus fertigungstechnischen Gründen ist es jedoch vorteilhafter, wenn das Haftsystem (III) eine eigene Haftschicht bildet, wobei die unterschiedliche Haftwirkung innerhalb des Zweizonensystems (A, B) ausschließlich auf der dem Festigkeitsträgersystem (II) zugewandten Seite, insbesondere wiederum direkt am Festigkeitsträgersystem, zur Entfaltung gelangt.

Nach der anderen Variante ist zwischen dem Festigkeitstärgersystem (II) und der Zwischenschicht ein Haftsystem - im folgenden Haftsystem (IV) genannt - vorhanden, das ebenfalls mit einem radial, wendelförmig oder axial verlaufenden Zweizonensystem (A, B) versehen ist, das sich durch die bereits oben näher beschriebenen Haftdifferenzierungen auszeichnet, wobei hinsichtlich des Haftsystems (IV) insbesondere folgende Alternativen zur Anwendung gelangen.
- Das Haftsystem (IV) ist einstückig mit der Zwischenschicht verbunden, wobei die unterschiedliche Haftwirkung innerhalb des Zweizonensystems (A, B) direkt am Festigkeitsträgersystem (II) oder vorzugsweise an einer Zusatzschicht, die sich zwischen dem Haftsystem (IV) und dem Festigkeitsträgersystem (II) befindet, zur Entfaltung gelangt. Dabei weist die Zusatzschicht vorteilhafterweise eine geringere Stärke auf als die eigentliche Zwischenschicht.
- Aus fertigungstechnischen Gründen ist es auch hier vorteilhafter, wenn das Haftsystem (IV) eine eigene Haftschicht bildet, wobei die unterschiedliche Haftwirkung innerhalb des Zweizonensystems (A, B) ausschließlich auf der dem Festigkeitsträgersystem zugewandten Seite zur Entfaltung gelangt, und zwar direkt am Festigkeitsträgersystem (II) oder an einer Zusatzschicht, wie sie oben bereits näher ausgeführt ist.

Bezüglich des Haftsystems (III, IV) mit dem erfindungsgemäßen Zweizonensystem (A, B) gelten unabhängig von den oben vorgestellten Varianten bzw. Alternativen zweckmäßigerweise folgende Gestaltungsmöglichkeiten:
- Innerhalb jeder Zone (A, B) selbst ist die Haftwirkung im wesentlichen konstant.
- Das Haftsystem (III, IV) erstreckt sich im wesentlichen über die gesamte Schlauchlänge.
- Die Zone (A) mit der geringeren Haftwirkung weist einen Haftwert < 1 N/mm, insbesondere ≤ 0,5 % N/mm, auf; während die Zone (B) mit der größeren Haftwirkung einen Haftwert > 1 N/mm, insbesondere ≥ 2 N/mm, besitzt.
- Die Zone (B) mit der größeren Haftwirkung besitzt eine Breite b, die gegenüber der Breite a der Zone (A) mit der geringeren Haftwirkung kleiner ist. wobei insbesondere folgende Breitenparameter gelten:
b = (10 bis 30 %) von a
- Bei einem radial oder wendelförmig verlaufenden Zweizonensystem (A, B) weist die Breite a der Zone (A) mit der geringeren Haftwirkung das 1- bis 3-fache des Schlauchaußendurchmessers auf.
- Bei einem axial verlaufenden Zweizonensystem (A, B) sind auf den Schlauchumfang verteilt wenigstens drei Zonen (A) vorhanden.
- Insbesondere bei einem radialen Verlauf des Zweizonensystems (A, B) ist innerhalb der Zone (B) mit der größeren Haftwirkung wenigstens ein axial verlaufender Kanal angeordnet, wobei die Breite c des Kanals vorzugsweise mindestens 5 mm beträgt, und zwar bezogen auf die Draufsicht.
- Die Zwischenschicht sowie die Zusatzschicht gemäß Anspruch 5 bestehen aus einem thermoplastischen Elastomer.

Weiterhin ist es von Vorteil, wenn in dem Bereich zwischen den beiden Festigkeitsträgersystemen (I, II) eine versteifende Spirale aus Kunststoff oder metallischem Werkstoff angeordnet ist, die sich durch eine hohe chemische Beständigkeit gegenüber dem zu fördernden Stoff auszeichnet, wobei die Spirale vorzugsweise in unmittelbarer Nähe eines der beiden Festigkeitsträgersysteme (I, II) verläuft.

Zweckmäßigerweise sind die Festigkeitsträgersysteme (I) und/oder (II) mit einem elektrisch leitenden System ausgestattet, wobei insbesondere folgende Parameter gelten:
- Das Festigkeitsträgersystem (II) enthält bei einer Bruchdehnung > 10 % ein elektrisch leitendes System, das eine Bruchdehnung < 10 % aufweist.
- Das Festigkeitsträgersystem (I) besitzt bei einer Bruchdehnung < 10 % ein elektrisch leitfähiges System, das eine Bruchdehnung aufweist, die nicht größer ist als die des Festigkeitsträgersystems (I).

Das elektrisch leitende System ist dabei vorteilhafterweise mit einem Warnsystem verbunden, das insbesondere im Bereich des Schlauchendes angeordnet ist.

Die Erfindung wird nun anhand von Ausführungsbeispielen unter Bezugnahme auf schematische Zeichnungen erläutert. Es zeigen:
- Fig. 1: einen Längsschnitt eines Sicherheitsschlauches, bei dem das radial verlaufende Zweizonensystem (A, B) des Haftsystems (III) zwischen dem Festigkeitsträgersystem (II) und der Außenschicht angeordnet ist;
- Fig. 2: einen Längsschnitt eines Sicherheitsschlauches, bei dem das radial verlaufende Zweizonensystem (A, B) des Haftsystems (IV) zwischen dem Festigkeitsträgersystem (II) und der Zwischenschicht angeordnet ist, und zwar unter Verwendung einer Zusatzschicht;
- Fig. 3: eine Draufsicht des radial verlaufenden Zweizonensystems (A, B), bei dem innerhalb der Zone (B) ein axial verlaufender Kanal angeordnet ist.

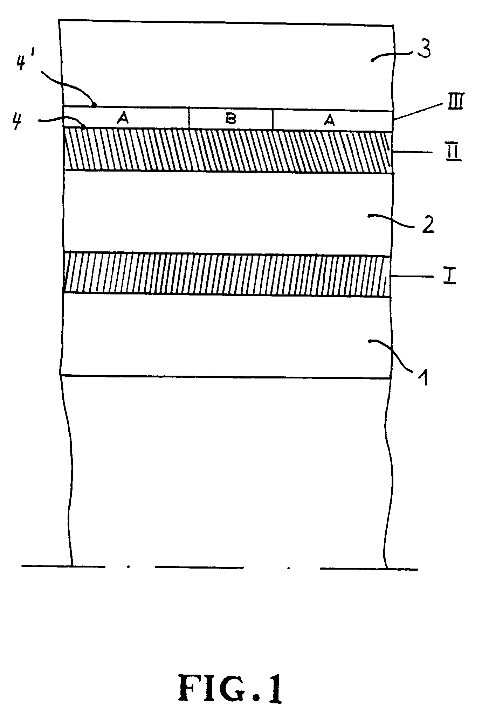

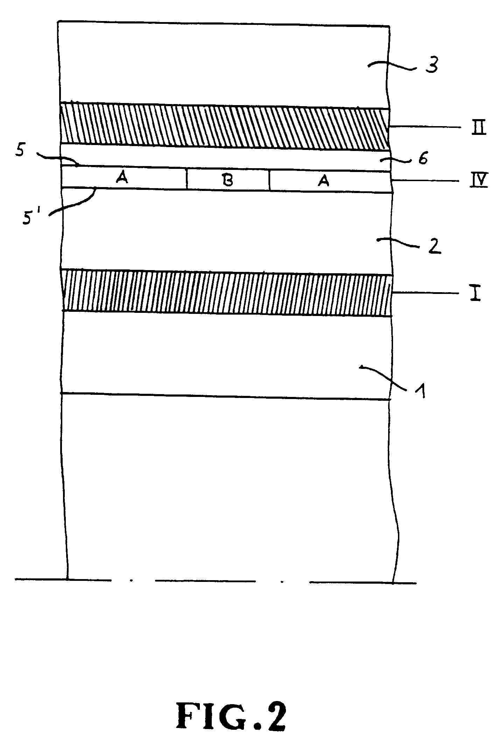

Die Fig. 1 und 2 zeigen zwei Schlauchkonstruktionen, die gemeinsam folgenden Grundaufbau aufzeigen:
1 Innenschicht (Seele)
2 Zwischenschicht
3 Außenschicht (Decke)
   I Festigkeitsträgersystem mit geringer Dehnung sowie hoher chemischer Beständigkeit gegenüber dem zu fördernden Stoff
   II Festigkeitsträgersystem mit hoher Dehnung

Nach Fig. 1 befindet sich nun zwischen dem Festigkeitsträgersystem (II) und der Außenschicht (3) ein Haftsystem (III), das mit einem radial verlaufenden Zweizonensystem (A, B) versehen ist, wobei sich die Zone (A) gegenüber der Zone (B) durch eine geringere Haftwirkung auszeichnet. Das Haftsystem (III) bildet dabei eine eigene Haftschicht, wobei die unterschiedliche Haftwirkung innerhalb des Zweizonensystems (A, B) ausschließlich auf der dem Festigkeitsträgersystem (II) zugewandten Seite (4) wirkt, und zwar direkt am Festigkeitsträgersystem. Hinsichtlich der der Außenschicht (3) zugewandten Seite (4') des Haftsystems (III) gelten die üblichen konstanten Haftbedingungen.

Nach Fig. 2 ist der Sicherheitsschlauch mit einem Haftsystem (IV) ausgestattet, das sich zwischen dem Festigkeitsträgersystem (II) und der Zwischenschicht (2) befindet und dabei ebenfalls mit einem radial verlaufenden Zweizonensystem (A, B) versehen ist, wobei sich die Zone (A) gegenüber der Zone (B) durch eine geringere Haftwirkung auszeichnet Zwischen dem Haftsystem (IV) und dem Festigkeitsträgersystem (II) ist hier eine Zusatzschicht (6) angeordnet, die eine geringere Stärke aufweist als die eigentliche Zwischenschicht (2). Das Haftsystem (IV) ist auch hier als eine eigene Haftschicht ausgebildet, wobei die unterschiedliche Haftwirkung innerhalb des Zweizonensystems (A, B) ausschließlich auf der dem Festigkeitsträgersystem (II) zugewandten Seite (5) zur Entfaltung gelangt, und zwar hier an der Zusatzschicht (6). Hinsichtlich der der Zwischenschicht (2) zugewandten Seite (5') des Haftsystems (IV) gelten wiederum die üblichen konstanten Haftbedingungen.

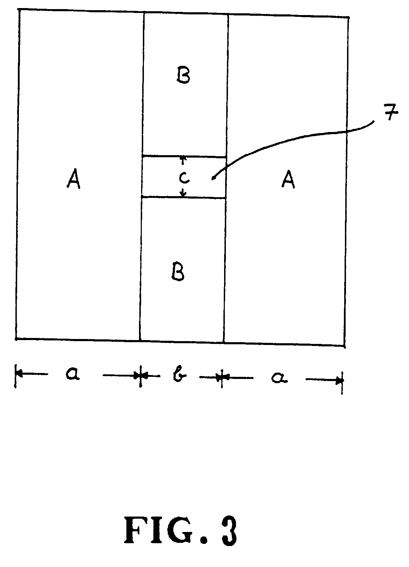

Fig. 3 zeigt nun das radial verlaufende Zweizonensystem (A, B) mit der Breite a für die Zone (A) und der Breite b für die Zone (B), wobei sich innerhalb der Zone (B) ein in axialer Richtung verlaufender Kanal (7) mit der Breite c befindet.

Diese Ausführungsbeispiele verdeutlichen, daß im Falle eines Versagens des Grundkörpers, d.h. der Innenschicht (1), des Festigkeitsträgersystems (I) und der Zwischenschicht (3), ohne Stoffaustritt eine Notlaufeigenschaft gebildet wird. So wird beispielsweise in Verbindung mit der Schlauchkonstruktion gemäß Fig. 1 die Außenschicht (3) im Bereich der Zone (A) unter Blasenbildung abgelöst, wobei die Blase den diffundierenden Stoff aufnehmen kann. Bei wendelförmiger oder axialer Anordnung des Zweizonensystems (A, B) wird dann der Stoff zudem wendelförmig bzw. axial in Schlauchrichtung transportiert.

Bei radialer Anordnung des Zweizonensystems (A, B) ist es dann von Vorteil, wenn gemäß Fig. 3 die Zone (B) wenigstens einen in axialer Richtung verlaufenden Kanal (7) aufweist, wobei dann die Breite c des Kanals wenigstens 5 mm betragen sollte.

## Patentansprüche

1. Sicherheitsschlauch aus elastomerem Werkstoff und/oder Kunststoff, insbesondere zur Förderung umweltgefährdender Stoffe, bestehend aus
- einer Innenschicht (1);
- einer Außenschicht (3) sowie
- einem eingebetteten Festigkeitsträger, umfassend wiederum zwei Festigkeitsträgersysteme (I, II), die jeweils ein- oder mehrlagig ausgebildet sind, wobei sich zwischen den beiden Festigkeitsträgersystemen wenigstens eine trennende Zwischenschicht (2) befindet und wobei das der Innenschicht (1) zugewandte Festigkeitsträgersystem (I) eine geringe Dehnung sowie eine hohe chemische Beständigkeit gegenüber dem zu fördernden Stoff aufweist, während das der Außenschicht (3) zugewandte Festigkeitsträgersystem (II) eine hohe Dehnung besitzt;
dadurch gekennzeichnet, daß
- zwischen dem Festigkeitsträgersystem (II) und der Außenschicht (3) ein Haftsystem (III) vorhanden ist, das mit einem radial, wendelförmig oder axial verlaufenden Zweizonensystem (A, B) versehen ist, wobei sich die eine Zone (A) gegenüber der anderen Zone (B) durch eine geringere Haftwirkung auszeichnet.

2. Sicherheitsschlauch aus elastomerem Werkstoff und/oder Kunststoff, insbesondere zur Förderung umweltgefährdender Stoffe, bestehend aus
- einer Innenschicht (1);
- einer Außenschicht (3) sowie
- einem eingebetteten Festigkeitsträger, umfassend wiederum zwei Festigkeitsträgersysteme (I, II), die jeweils ein- oder mehrlagig ausgebildet sind, wobei sich zwischen den beiden Festigkeitsträgersystemen wenigstens eine trennende Zwischenschicht (2) befindet und wobei das der Innenschicht (1) zugewandte Festigkeitsträgersystem (I) eine geringe Dehnung sowie eine hohe chemische Beständigkeit gegenüber dem zu fördernden Stoff aufweist, während das der Außenschicht (3) zugewandte Festigkeitsträgersystem (II) eine hohe Dehnung besitzt;
dadurch gekennzeichnet, daß
- zwischen dem Festigkeitsträgersystem (II) und der Zwischenschicht (2) ein Haftsystem (IV) vorhanden ist, das mit einem radial, wendelförmig oder axial verlaufenden Zweizonensystem (A, B) versehen ist, wobei sich die eine Zone (A) gegenüber der anderen Zone (B) durch eine geringere Haftwirkung auszeichnet.

3. Sicherheitsschlauch nach Anspruch 1, dadurch gekennzeichnet, daß das Haftsystem (III)
- einstückig mit der Außenschicht (3) verbunden ist, wobei die unterschiedliche Haftwirkung innerhalb des Zweizonensystems (A, B) insbesondere direkt am Festigkeitsträgersystem (II) zur Entfaltung gelangt; oder vorzugsweise
- eine eigene Haftschicht bildet, wobei die unterschiedliche Haftwirkung innerhalb des Zweizonensystems (A, B) ausschließlich auf der dem Festigkeitsträgersystem (II) zugewandten Seite (4), insbesondere direkt am Festigkeitsträgersystem, zur Entfaltung gelangt.

4. Sicherheitsschlauch nach Anspruch 2, dadurch gekennzeichnet, daß das Haftsystem (IV)
- einstückig mit der Zwischenschicht (2) verbunden ist oder vorzugsweise
- eine eigene Haftschicht bildet, wobei die unterschiedliche Haftwirkung innerhalb des Zweizonensystems (A, B) ausschließlich auf der dem Festigkeitsträgersystem (II) zugewandten Seite (5) zur Entfaltung gelangt.

5. Sicherheitsschlauch nach Anspruch 4, dadurch gekennzeichnet, daß bei dem Haftsystem (IV) die unterschiedliche Haftwirkung innerhalb des Zweizonensystems (A, B)
- direkt am Festigkeitsträgersystem (II) oder vorzugsweise
- an einer Zusatzschicht (6), die sich zwischen dem Haftsystem (IV) und dem Festigkeitsträgersystem (II) befindet, zur Entfaltung gelangt, wobei die Zusatzschicht (6) vorzugsweise eine geringere Stärke aufweist als die eigentliche Zwischenschicht (2).

6. Sicherheitsschlauch nach einem der Ansprüche 1 bis 5, dadurch gekennzeichnet, daß innerhalb jeder Zone (A, B) die Haftwirkung im wesentlichen konstant ist.

7. Sicherheitsschlauch nach einem der Ansprüche 1 bis 6, dadurch gekennzeichnet, daß sich das Haftsystem (III, IV) mit dem Zweizonensystem (A, B) im wesentlichen über die gesamte Schlauchlänge erstreckt.

8. Sicherheitsschlauch nach einem der Ansprüche 1 bis 7, dadurch gekennzeichnet, daß die Zone (A) mit der geringeren Haftwirkung einen Haftwert < 1 N/mm, insbesondere ≤ 0,5 N/mm, aufweist: während die Zone (B) mit der größeren Haftwirkung einen Haftwert > 1 N/mm, insbesondere ≥ 2 N/mm, besitzt.

9. Sicherheitsschlauch nach einem der Ansprüche 1 bis 8, dadurch gekennzeichnet, daß die Zone (B) mit der größeren Haftwirkung eine Breite b besitzt, die gegenüber der Breite a der Zone (A) mit der geringeren Haftwirkung kleiner ist, wobei insbesondere folgende Breitenparameter gelten:
b = (10 bis 30 %) von a

10. Sicherheitsschlauch nach einem der Ansprüche 1 bis 9, dadurch gekennzeichnet, daß bei einem radial oder wendelförmig verlaufenden Zweizonensystem (A, B) die Breite a der Zone (A) mit der geringeren Haftwirkung das 1- bis 3-fache des Schlauchaußendurchmessers aufweist.

11. Sicherheitsschlauch nach einem der Ansprüche 1 bis 9, dadurch gekennzeichnet, daß bei einem axial verlaufenden Zweizonensystem (A, B) auf den Schlauchumfang verteilt wenigstens drei Zonen (A) vorhanden sind.

12. Sicherheitsschlauch nach einem der Ansprüche 1 bis 10, dadurch gekennzeichnet, daß insbesondere bei einem radialen Verlauf des Zweizonensystems (A, B) innerhalb der Zone (B) mit der größeren Haftwirkung wenigstens ein axial verlaufender Kanal (7) angeordnet ist, wobei die Breite c des Kanals vorzugsweise mindestens 5 mm beträgt, und zwar bezogen auf die Draufsicht.

13. Sicherheitsschlauch nach einem der Ansprüche 1 bis 12, dadurch gekennzeichnet, daß die Zwischenschicht (2) sowie die Zusatzschicht (6) gemäß Anspruch 5 aus einem thermoplastischen Elastomer bestehen.

14. Sicherheitsschlauch nach einem der Ansprüche 1 bis 13, dadurch gekennzeichnet, daß in dem Bereich zwischen den beiden Festigkeitsträgersystemen (I, II) eine versteifende Spirale aus Kunststoff oder metallischem Werkstoff angeordnet ist, die sich durch eine hohe chemische Beständigkeit gegenüber dem zu fördernden Stoff auszeichnet, wobei die Spirale vorzugsweise in unmittelbarer Nähe einer der beiden Festigkeitsträgersysteme (I, II) verläuft.

15. Sicherheitsschlauch nach einem der Ansprüche 1 bis 14, dadurch gekennzeichnet, daß das der Außenschicht (3) zugewandte Festigkeitsträgersystem (II) bei einer Bruchdehnung > 10 % ein elektrisch leitendes System enthält, das eine Bruchdehnung < 10 % aufweist

16. Sicherheitsschlauch nach einem der Ansprüche 1 bis 15, dadurch gekennzeichnet, daß das der Innenschicht (1) zugewandte Festigkeitsträgersystem (I) bei einer Bruchdehnung < 10 % ein elektrisch leitfähiges System enthält, das eine Bruchdehnung aufweist, die nicht größer ist als die des Festigkeitsträgersystems (I).

17. Sicherheitsschlauch nach Anspruch 15 oder 16, dadurch gekennzeichnet, daß das elektrisch leitende System mit einem Warnsystem verbunden ist, das insbesondere im Bereich des Schlauchendes angeordnet ist.

## Claims

1. A safety hose of elastomeric material and/or plastics, especially for the transport of substances of danger to the environment, and consisting of
- an inner layer (1);
- an outer layer (3); as well as
- an embedded strength carrier comprising in turn two strength-carrier systems (I, II) which are respectively formed in one or more layers, with at least one separating interlayer (2) between the pair of strength-carrier systems, the strength-carrier system (I) next the inner layer (1) exhibiting low elongation as well as high chemical resistance to the substance to be transported, whilst the strength-carrier system (II) next the outer layer (3) has a high elonggation;
characterized in that
- between the strength-carrier system (II) and the outer layer (3) there is an adhesive system (III) which is provided with a two-zone system (A, B) running radially, spirally or axially, the one zone (A) being distinguished with respect to the other zone (B) by a lower adhesive action.

2. A safety hose of elastomeric material and/or plastics, especially for the transport of substances of danger to the environment, and consisting of
- an inner layer (1);
- an outer layer (3); as well as
- an embedded strength carrier comprising in turn two strength-carrier systems (I, II) which are respectively formed in one or more layers, with at least one separatirg interlayer (2) between the pair of strength-carrier systems, the strength-carrier system (I) next the inner layer (1) exhibiting low elongation as well as high chemical resistance to the substance to be transported, whilst the strength-carrier system (II) next the outer layer (3) has a high elonggation;
characterized in that
- between the strength-carrier system (II) and the interlayer (2) there is an adhesive system (IV) which is provided with a two-zone system (A, B) running radially, spirally or axially, the one zone (A) being distinguished with respect to the other zone (B) by a lower adhesive action.

3. A safety hose as in Claim 1, characterized in that the adhesive system (III)
- is combined in one piece with the outer layer (3), the differing adhesive action within the two-zone system (A, B) becoming developed especially directly on the strength-carrier system (II); or preferably
- forms an inherent adhesive layer, the differing adhesive action within the two-zone system (A, B) becoming developed exclusively on the side (4) next the strength-carrier system (II), especially directly on the strength-carrier system.

4. A safety hose as in Claim 2, characterized in that the adhesive system (IV)
- is combined in one piece with the interlayer (2), or preferably
- forms an inherent adhesive layer, the differing adhesive action within the two-zone system (A, B) becoming developed exclusively on the side (5) next the strength-carrier system (II).

5. A safety hose as in Claim 4, characterized in that in the case of the adhesive systems (IV) the differing adhesive action within the two-zone system (A, B) becomes developed
- directly on the strength-carrier system (II) ; or preferably
- on an additional layer (6) lying between the adhesive system (IV) and the strength-carrier system (II), the additional layer (6) preferably exhibiting a thickness lees than the actual interlayer (2).

6. A safety hose as in one of the Claims 1 to 5, characterized in that within each zone (A, B) the adhesive action is essentially constant.

7. A safety hose as in one of the Claims 1 to 6, characterized in that the adhesive system (III, IV) with the two-zone system (A, B) extends essentially over the whole length of hose.

8. A safety hose as in one of the Claims 1 to 7, characterized in that zone (A) of lower adhesive action exhibits a factor of adhesion less than 1 N/mm, especially ≤ 0.5 N/mm, whilst zone (B) of higher adhesive action has a factor of adhesion > 1 N/mm, especially ≥ 2 N/mm.

9. A safety hose as in one of the Claims 1 to 8, characterized in that zone (B) of higher adhesive action has a width *b* which is less than the width *a* zone (A) of lower adhesive action, the following width parameters being especially applicable:
*b* = (10 to 30%) of *a*.

10. A safety hose as in one of the Claims 1 to 9, characterized in that in the case of a two-zone system (A, B) running radially or spirally the width *a* of zone (A) of lower adhesive action exhibits 1 to 3 times the outer diameter of the hose.

11. A safety hose as in one of the Claims 1 to 9, characterized in that in the case of a two-zone system (A, B) running axially there are at least three zones (A) distributed over the periphery of the hose.

12. A safety hose as in one of the Claims 1 to 10, characterized in that, especially in the case of a radial run of the two-zone system (A, B) at least one channel (7) running axially is arranged within the zone (B) of higher adheive action, the width *c* of the channel preferably amounting to at least 5 mm, that is, referred to the plan.

13. A safety hose as in one of the Claims 1 to 12, characterized in that the interlayer (2) as well as the additional layer (6) in accordance with Claim 5 consist of a thermoplastic elastomer.

14. A safety hose as in one of the Claims 1 to 13, characterized in that in the region beween the two strength-carrier systems (I, II) there is arranged a stiffening spiral of plastics or metallic material, which is distinguished by high chemical resistance to the substance which is to be transported, the spiral running preferably in the direct neighbourhood of one of the pair of strength-carrier systems (I, II).

15. A safety hose as in one of the Claims 1 to 14, characterized in that where the strength-carrier system (II) next the outer layer (3) has a breaking elongation > 10% it contains an electrically conductive system which exhibits a breaking elongation < 10%.

16. A safety hose as in one of the Claims 1 to 15, characterized in that where the strength-carrier system (I) next the inner layer (1) has a breaking elongation < 10% it contains an electrically conductive system which exhibits a breaking elongation which is not greater than that of the strength-carrier system (I).

17. A safety hose as in Claim 15 or 16, characterized in that the electrically conductive system is connected to a warning system which in particular is arranged in the region of the end of the hose.

## Revendications

1. Tuyau flexible de sécurité en une matière élastomère et/ou une matière plastique, en particulier pour le transport de substances présentant un danger pour l'environnement, constitué
- d'une couche intérieure (1);
- d'une couche extérieure (3), ainsi que
- d'une armature noyée, comprenant pour sa part deux systèmes d'armature (I, Il) qui sont chacun réalisés en une ou plusieurs épaisseurs, au moins une couche intermédiaire de séparation (2) se trouvant alors entre les deux systèmes d'armature et le système d'armature (1) situé du côté de la couche intérieure (1) présentant une faible extensibilité ainsi qu'une résistance chimique élevée vis-à-vis de la substance à transporter, tandis que le système d'armature (Il) situé du côté de la couche extérieure (3) possède une extensibilité élevée;
caractérisé en ce que
- entre le système d'armature (Il) et la couche extérieure (3), est présent un système d'adhérence (III), qui est pourvu d'un système de deux zones (A, B) s'étendant radialement, sous forme hélicoïdale ou axialement, l'une (A) des zones se distinguant alors de l'autre zone (B) par une plus faible adhésivité.

2. Tuyau flexible de sécurité en une matière élastomère et/ou une matière plastique, en particulier pour le transport de substances présentant un danger pour l'environnement, constitué
- d'une couche intérieure (1);
- d'une couche extérieure (3), ainsi que
- d'une armature noyée, comprenant pour sa part deux systèmes d'armature (I, Il) qui sont chacun réalisés en une ou plusieurs épaisseurs, au moins une couche intermédiaire de séparation (2) se trouvant alors entre les deux systèmes d'armature et le système d'armature (I) situé du côté de la couche intérieure (1) présentant une faible extensibilité ainsi qu'une résistance chimique élevée vis-à-vis de la substance à transporter, tandis que le système d'armature (Il) situé du côté de la couche extérieure (3) possède une extensibilité élevée;
caractérisé en ce que
- entre le système d'armature (II) et la couche intermédiaire (2), est présent un système d'adhérence (IV), qui est pourvu d'un système de deux zones (A, B) s'étendant radialement, sous forme hélicoïdale ou axialement, l'une (A) des zones se distinguant alors de l'autre zone (B) par une plus faible adhésivité.

3. Tuyau flexible de sécurité selon la revendication 1, caractérisé en ce que le système d'adhérence (III)
- est relié en une pièce à la couche extérieure (3), l'adhésivité différente à l'intérieur du système de deux zones (A, B) se manifestant alors, en particulier, directement au contact du système d'armature (Il) ; ou, de préférence,
- forme une couche d'adhérence propre, l'adhésivité différente à l'intérieur du système de deux zones (A, B) se manifestant alors exclusivement sur la face (4) tournée vers le système d'armature (Il), en particulier directement au contact du système d'armature.

4. Tuyau flexible de sécurité selon la revendication 2, caractérisé en ce que le système d'adhérence (IV)
- est relié en une pièce à la couche intermédiaire (2) ou, de préférence,
- forme une couche d'adhérence propre, l'adhésivité différente à l'intérieur du système de deux zones (A, B) se manifestant alors exclusivement sur la face (5) tournée vers le système d'armature (II).

5. Tuyau flexible de sécurité selon la revendication 4, caractérisé en ce que, dans le cas du système d'adhérence (IV), l'adhésivité différente à l'intérieur du système de deux zones (A, B)
- se manifeste directement au contact du système d'armature (Il) ou, de préférence,
- se manifeste au contact d'une couche additionnelle (6), qui se trouve entre le système d'adhérence (IV) et le système d'armature (Il), la couche additionnelle (6) présentant alors, de préférence, une épaisseur plus faible que celle de la couche intermédiaire (2) proprement dite.

6. Tuyau flexible de sécurité selon l'une des revendications 1 à 5, caractérisé en ce qu'à l'intérieur de chaque zone (A, B), l'adhésivité est sensiblement constante.

7. Tuyau flexible de sécurité selon l'une des revendications 1 à 6, caractérisé en ce que le système d'adhérence (III, IV), avec le système de deux zones (A, B), s'étend sensiblement sur la longueur entière du tuyau flexible.

8. Tuyau flexible de sécurité selon l'une des revendications 1 à 7, caractérisé en ce que la zone (A), ayant l'adhésivité la plus faible, présente une valeur d'adhérence <1 N/mm, en particulier ≤0,5 N/mm, tandis que la zone (B), ayant l'adhésivité la plus élevée, possède une valeur d'adhérence >1 N/mm, en particulier ≥2 N/mm.

9. Tuyau flexible de sécurité selon l'une des revendications 1 à 8, caractérisé en ce que la zone (B), ayant l'adhésivité la plus élevée, possède une largeur b qui est plus petite que la largeur a de la zone (A) ayant l'adhésivité la plus faible, les paramètres de largeur suivants étant en particulier appliqués:
b = (10 à 30%) de a

10. Tuyau flexible de sécurité selon l'une des revendications 1 à 9, caractérisé en ce que, dans le cas d'un système de deux zones (A, B) s'étendant radialement ou sous forme hélicoïdale, la largeur a de la zone (A), ayant l'adhésivité la plus faible, représente 1 à 3 fois le diamètre extérieur du tuyau flexible.

11. Tuyau flexible de sécurité selon l'une des revendications 1 à 9, caractérisé en ce que, dans le cas d'un système de deux zones (A, B) s'étendant axialement en étant réparti sur la circonférence du tuyau flexible, trois zones (A) au moins sont présentes.

12. Tuyau flexible de sécurité selon l'une des revendications 1 à 10, caractérisé en ce que, dans le cas notamment d'une extension en direction radiale du système de deux zones (A, B), au moins un canal (7) s'étendant axialement est disposé à l'intérieur de la zone (B) ayant l'adhésivité la plus élevée, la largeur c du canal étant alors égale, de préférence, à au moins 5 mm, rapportée à la vue de dessus.

13. Tuyau flexible de sécurité selon l'une des revendications 1 à 12, caractérisé en ce que la couche intermédiaire (2), ainsi que la couche additionnelle (6) conforme à la revendication 5, se composent d'un élastomère thermoplastique.

14. Tuyau flexible de sécurité selon l'une des revendications 1 à 13, caractérisé en ce que dans la région entre les deux systèmes d'armature (I, Il), est disposée une spirale de rigidification en matière plastique ou en un matériau métallique, qui se distingue par une résistance chimique élevée vis-à-vis de la substance à transporter, la spirale s'étendant, de préférence, à proximité immédiate de l'un des deux systèmes d'armature (I, II).

15. Tuyau flexible de sécurité selon l'une des revendications 1 à 14, caractérisé en ce que le système d'armature (II) situé du côté de la couche extérieure (3) renferme, dans le cas d'un allongement à la rupture >10%, un système électriquement conducteur, qui présente un allongement à la rupture <10%.

16. Tuyau flexible de sécurité selon l'une des revendications 1 à 15, caractérisé en ce que le système d'armature (I) situé du côté de la couche intérieure (1) renferme, dans le cas d'un allongement à la rupture <10%, un système électriquement conducteur, qui présente un allongement à la rupture qui n'est pas supérieur à celui du système d'armature (I).

17. Tuyau flexible de sécurité selon la revendication 15 ou 16, caractérisé en ce que le système électriquement conducteur est relié à un système d'alarme qui est disposé, en particulier, dans la région de l'extrémité du tuyau flexible.
